(19) Europäisches Patentamt
European Patent Office
Office européen des brevets

(11) **EP 2 826 558 A1**

(12) **EUROPEAN PATENT APPLICATION**
published in accordance with Art. 153(4) EPC

(43) Date of publication:
**21.01.2015 Bulletin 2015/04**

(21) Application number: **13760652.1**

(22) Date of filing: **28.02.2013**

(51) Int Cl.:
*B01J 23/04* (2006.01)     *B01D 53/94* (2006.01)
*F01N 3/023* (2006.01)     *F01N 3/035* (2006.01)
*F01N 3/10* (2006.01)

(86) International application number:
**PCT/JP2013/055279**

(87) International publication number:
**WO 2013/136991 (19.09.2013 Gazette 2013/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **12.03.2012  JP 2012054182**

(71) Applicant: **Otsuka Chemical Holdings Co., Ltd.
Osaka-shi, Osaka 540-0021 (JP)**

(72) Inventors:
• **UETANI, Masatoshi
Tokushima-shi
Tokushima 771-0193 (JP)**
• **MISHIMA, Takahiro
Tokushima-shi
Tokushima 771-0193 (JP)**

(74) Representative: **Merkle, Gebhard
Ter Meer Steinmeister & Partner
Patentanwälte mbB
Mauerkircherstrasse 45
81679 München (DE)**

(54) **EXHAUST GAS PURIFICATION CATALYST, EXHAUST GAS PURIFICATION DEVICE AND FILTER, AND PRODUCTION METHOD FOR SAID CATALYST**

(57)     Provided is an exhaust gas purification catalyst having high catalytic activity enabling combustion of PM (particulate matter) at low temperatures and excellent thermal resistance, an exhaust gas purification device and filter having high combustion efficiency of PM and excellent durability, and a method for producing the catalyst. The exhaust gas purification catalyst of the present invention is composite oxide particles containing at least one alkali metal, Si, and Zr.

[FIG. 1]

EP 2 826 558 A1

**Description**

Technical Field

This invention relates to exhaust gas purification catalysts for combusting particulate matter (PM) contained in exhaust gases, exhaust gas purification devices and filters, and methods for producing the catalysts.

Background Art

Conventional methods for removing PM contained in exhaust gases discharged from an internal combustion engine, such as a diesel engine, include a method of placing a honeycomb filter made of a heat-resistance ceramic, such as silicon carbide, aluminum titanate or cordierite, in an exhaust system, collecting PM on the honeycomb filter to remove PM from the exhaust gases, and then, upon deposition of a predetermined amount of PM on the honeycomb filter, applying heat to the honeycomb filter to decompose PM by combustion. However, the combustion temperature of PM is as high as 550 to 650°C, which presents a problem of a large size of the entire exhaust gas purification device and a problem of high energy cost for heat application.

As a solution to them, a honeycomb filter is used in which a catalyst for combusting PM is supported on its surface. With this method, the combustion temperature of PM can be reduced by catalysis to reduce the energy taken to apply heat to the honeycomb filter.

Precious metals, such as platinum, are known as such catalysts but the amount of production thereof is extremely small, which carries a risk of significant variations in supply-demand balance and price. Alternatively, silicates, aluminates, and zirconates of alkali metals are proposed as exhaust gas catalysts in Patent Literature 1. However, these catalysts have a problem in that they may react with the support of the exhaust gas purification filter to lose their catalytic activity or deteriorate the support of the exhaust gas purification filter.

Meanwhile, exhaust gas catalysts for motor vehicles are required to have high thermal resistance because they may be exposed to high-temperature gases reaching even 1000°C depending upon running conditions of motor vehicles.

Citation List

Patent Literature

Patent Literature 1: JP-A-H10-118490

Summary of Invention

Technical Problem

An object of the present invention is to provide an exhaust gas purification catalyst having high catalytic activity enabling combustion of PM at low temperatures and excellent thermal resistance, an exhaust gas purification device and filter having high combustion efficiency of PM and excellent durability, and a method for producing the catalyst.

Solution to Problem

The inventors conducted intensive studies to solve the above problems and thus found that an exhaust gas purification catalyst containing composite oxide particles has high catalytic activity enabling combustion of PM at low temperatures and excellent thermal resistance. Based on this founding, the inventors further conducted studies and finally completed the present invention.

Specifically, the present invention provides the following exhaust gas purification catalyst, exhaust gas purification device and filter, and method for producing the catalyst.

Aspect 1: An exhaust gas purification catalyst being composite oxide particles containing at least one alkali metal, Si, and Zr.

Aspect 2: The exhaust gas purification catalyst according to aspect 1, having an ionic conductivity of $0.5 \times 10^{-6}$ mS/cm or more.

Aspect 3: The exhaust gas purification catalyst according to aspect 1 or 2, wherein the content rates of the metals, exclusive of oxygen, in the composite oxide are 30 to 60% by mole alkali metal, 20 to 60% by mole Si, and 10 to 40% by mole Zr.

Aspect 4: The exhaust gas purification catalyst according to aspect 1 or 2, wherein the composite oxide is represented by the following general formula:

$$A_{2X}Zr_XSi_YO_{3X+2Y}$$

(where A represents at least one alkali metal, X represents a positive real number satisfying $1 \leq X \leq 2$, and Y represents a positive real number satisfying $1 \leq Y \leq 6$.)

Aspect 5: An exhaust gas purification device including the exhaust gas purification catalyst according to any one of aspects 1 to 4.

Aspect 6: An exhaust gas purification filter, including a support and the exhaust gas purification catalyst according to any one of aspects 1 to 4, the exhaust gas purification catalyst being supported on the support.

Aspect 7: The exhaust gas purification filter according to aspect 6, wherein the support is a honeycomb filter.

Aspect 8: A method for producing the exhaust gas purification catalyst according to any one of aspects 1 to 4, wherein the exhaust gas purification catalyst is produced by firing a mixture containing at least one alkali metal salt, a silicon source, and a zirconium source.

Advantageous Effects of Invention

The present invention can provide an exhaust gas purification catalyst having high catalytic activity enabling combustion of PM at low temperatures and excellent thermal resistance and provide an exhaust gas purification device and filter having high combustion efficiency of PM and excellent durability.

Brief Description of Drawings

[Fig. 1] Fig. 1 is a graph showing an X-ray diffraction pattern chart of a catalyst obtained in Example 4.

[Fig. 2] Fig. 2 is a graph showing an X-ray diffraction pattern chart of a fired mixture of the catalyst in Example 4 and aluminum titanate.

[Fig. 3] Fig. 3 is a graph showing an X-ray diffraction pattern chart of a catalyst obtained in Comparative Example 5.

[Fig. 4] Fig. 4 is a graph showing an X-ray diffraction pattern chart of a fired mixture of the catalyst in Comparative Example 5 and aluminum titanate.

[Fig. 5] Fig. 5 is a schematic view showing an exhaust gas purification device of one embodiment according to the present invention.

[Fig. 6] Fig. 6 is a schematic view showing a hardness tester.

[Fig. 7] Fig. 7 is a schematic perspective view showing a honeycomb structure produced in an example according to the present invention.

Description of Embodiments

Hereinafter, a description will be given of an example of a preferred embodiment for working of the present invention. However, the following embodiment is simply illustrative. The present invention is not at all intended to be limited to the following embodiment.

An exhaust gas purification catalyst of the present invention is composite oxide particles and the composite oxide particles contain at least one alkali metal, Si, and Zr.

The exhaust gas purification catalyst of the present invention has an ionic conductivity of preferably $0.5 \times 10^{-6}$ mS/cm or more, more preferably $0.5 \times 10^{-6}$ to $10.0 \times 10^{-6}$ mS/cm. When the ionic conductivity is $0.5 \times 10^{-6}$ mS/cm or more, the catalytic activity becomes high and thus the combustion efficiency of PM can be improved.

The exhaust gas purification catalyst of the present invention is preferably composite oxide particles containing 30 to 60% by mole alkali metal, 10 to 40% by mole Zr, and 20 to 60% by mole Si and more preferably composite oxide particles containing 33 to 50% by mole alkali metal, 16 to 25% by mole Zr, and 25 to 51% by mole Si. Note that these values of % by mole are the content rates of the metals, exclusive of oxygen, in the composite oxide and values when the total content rate of all the metals therein is 100% by mole.

The composite oxide particles in the preferred embodiment, more specifically, can be represented by a general formula of $A_{2X}Zr_XSi_YO_{3X+2Y}$. In the formula, A represents at least one or more alkali metals. X represents a positive real number satisfying $1 \leq X \leq 2$ and Y represents a positive real number satisfying $1 \leq Y \leq 6$. More preferably, Y is a positive real number satisfying $1 \leq Y \leq 3$.

Examples of the alkali metal include Li, Na, K, Rb, Cs, and Fr. Preferred among them are Li, Na, K, and Cs because of their economic advantage.

Composite oxides which can be taken as examples of the exhaust gas purification catalyst of the present invention include $Li_2ZrSiO_5$, $Na_2ZrSiO_5$, $Na_4Zr_2Si_3O_{12}$, $Na_2ZrSi_2O_7$, $Na_2ZrSi_3O_9$, $K_2ZrSiO_5$, $K_2ZrSi_2O_7$, $K_2ZrSi_3O_9$, $Cs_4Zr_2Si_3O_{12}$, $Cs_2ZrSi_2O_7$, and $Cs_2ZrSi_3O_9$.

The exhaust gas purification catalyst of the present invention can contain other elements as long as its excellent characteristics are not impaired. Other elements which can be taken as examples include Fe, Nb, Ti, Al, Ce, Ca, Mg, Sr, Ba, Y, Mn, and P. The content rate of other elements is preferably within the range of 0.1 to 30.0% by mole.

Although no particular limitation is placed on the method for producing composite oxide particles used in the present invention, the composite oxide particles can be produced, for example, by firing a mixture containing at least one alkali metal salt, a silicon source, and a zirconium source.

The mixture ratio of alkali metal salt to zirconium source to silicon source can be appropriately selected depending upon the desired composition of the composite oxide particles but is preferably a ratio of 20 to 50% by mole alkali metal salt to 10 to 50% by mole zirconium source to 20 to 70% by mole silicon source and more preferably a ratio of 20 to 35% by mole alkali metal salt to 20 to 35% by mole zirconium source to 30 to 60% by mole silicon source.

The alkali metal salts include alkali metal carbonates; alkali metal hydrogen carbonates; alkali metal hydroxides; alkali metal organic acid salts, such as alkali metal acetates; alkali metal sulfates; and alkali metal nitrates, but the preferred alkali metal salts are alkali metal carbonates.

Although no particular limitation is placed on the silicon source so long as it is a source material containing elemental silicon and not interfering with the production of the composite oxide particles of the present invention by firing, examples include compounds which can be led to silicon oxide by firing in air. Examples of such compounds include silicon oxide and silicon and the preferred is silicon oxide.

Although no particular limitation is placed on the zirconium source so long as it is a source material containing elemental zirconium and not interfering with the production of the composite oxide particles of the present invention by firing, examples include compounds which can be led to zirconium oxide by firing in air. Examples of such compounds include zirconium oxide, zirconium carbonate hydrate, and zirconium sulfate hydrate and the preferred is zirconium oxide.

The temperature for firing the mixture can be appropriately selected depending upon the desired composition of the composite oxide particles but is preferably within the range of 900 to 1300°C.

The time for firing the mixture can be appropriately selected depending upon the desired composition of the composite oxide particles but is preferably 4 to 24 hours.

The exhaust gas purification catalyst of the present invention can combust at low temperatures PM contained in exhaust gases discharged from internal combustion engines and the like because of high catalytic activity of alkali metal and can further improve the combustion efficiency of PM because of its high ionic conductivity. Inclusion of Si and Zr in its crystal structure can improve the thermal resistance. In addition, Si and Zr in the crystal structure can be considered to reduce the elution of alkali metal and thus prevent deterioration of the support.

An exhaust gas purification device of the present invention includes the aforementioned exhaust gas purification catalyst of the present invention. Therefore, the exhaust gas purification device can combust PM at low temperatures, can improve the combustion efficiency of PM, and has high thermal resistance.

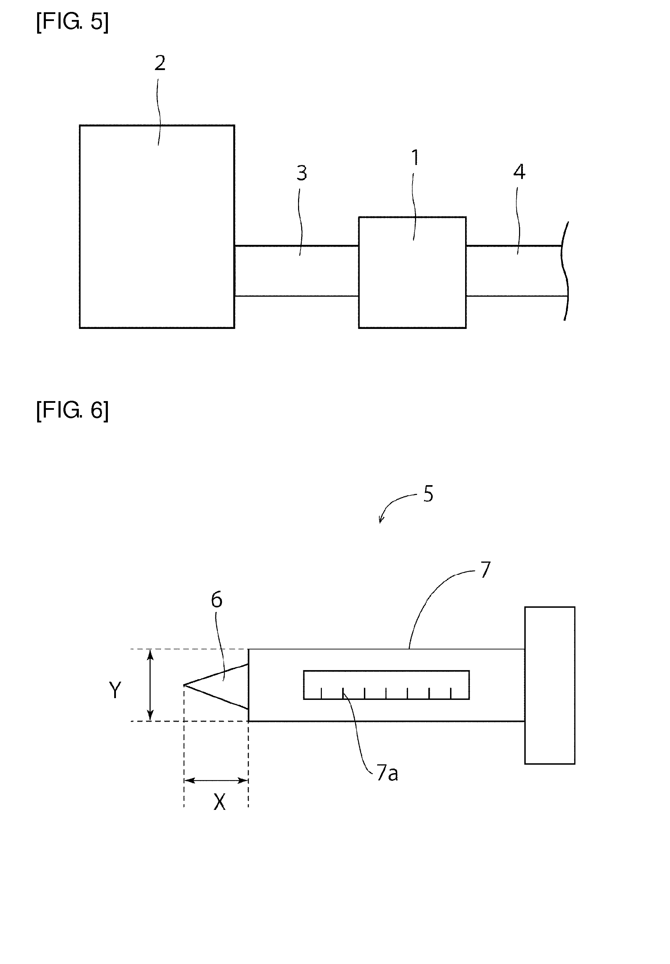

Fig. 5 is a schematic view showing an exhaust gas purification device of one embodiment according to the present invention. The exhaust gas purification device 1 is connected to a source 2 of exhaust gases through a pipe 3, so that gases discharged from the source 2 of exhaust gases pass through the pipe 3 and are sent to the exhaust gas purification device 1. After the exhaust gases are purified in the exhaust gas purification device 1, the purified gases are discharged through a pipe 4. Examples of the source 2 of exhaust gases include internal combustion engines, such as diesel engines and gasoline engines.

Examples of the exhaust gas purification device of the present invention include those equipped with an exhaust gas purification filter of the present invention.

Conventionally known supports can be used as the support of the exhaust gas purification filter without particular limitation so long as they have a filtration function. An example of the support is a honeycomb filter. Specifically, a wall-flow honeycomb filter made of ceramic is preferably used. The materials for the support preferably used include silicon carbide, cordierite, mullite, alumina, and aluminum titanate. In the case of the wall-flow honeycomb filter, no particular limitation is placed on the number of cells and the wall thickness. Although no particular limitation is placed on the type of the cell wall surface so long as it is a porous wall, the cell wall preferably has pores with a long diameter of about 1 to 50 $\mu$m.

The exhaust gas purification filter of the present invention includes a support and the exhaust gas purification catalyst supported on the support and can be used by supporting the exhaust gas purification catalyst on the surface of the support, the wall surfaces of the cells, the pores, and so on.

Examples of the method for supporting the exhaust gas purification catalyst on the support include the immersion method and the spraying method. For example, in the immersion method, the exhaust gas purification catalyst can be supported on the support by preparing a slurry from the exhaust gas purification catalyst together with a binder, a dispersant, and so on, immersing the support into the prepared catalyst slurry, picking up the support from the slurry, drying it, and then removing organic components by firing at 300 to 800°C. Alternatively, since the exhaust gas purification catalyst of the present invention has high thermal resistance and therefore low aggression to the support, it can be supported on the support by mixing ceramic particles as a source material of the support with the exhaust gas purification catalyst of the present invention, a pore-forming agent, and so on, forming the mixture into the shape of the support, and then firing the formed shape.

In addition, since the exhaust gas purification catalyst of the present invention has high thermal resistance and therefore low aggression to the support, the amount thereof supported on the support can be appropriately selected depending upon the desired filtering capability. For example, the exhaust gas purification catalyst of the present invention can be used within the range of 1 to 100 parts by mass, preferably 1 to 50 parts by mass, and more preferably 1 to 30 parts by mass, relative to 100 parts by mass of the support.

The exhaust gas purification catalyst of the present invention can combust PM at low temperatures, has high thermal resistance, and therefore has low aggression to the support. For this reason, the exhaust gas purification filter with the exhaust gas purification catalyst of the present invention supported thereon has a high combustion efficiency of PM, can prevent deterioration of the catalyst owing to high temperatures during abnormal combustion, and can achieve a highly reliable exhaust gas purification filter having excellent durability. The exhaust gas purification filter of the present invention, because of its excellent features, can be suitably used as a filter for a diesel engine (DPF), a filter for a gasoline engine or the like for the purpose of removing PM contained in exhaust gases discharged from such an internal combustion engine.

Examples

The present invention will be described below in further detail with reference to specific examples. The present invention is not at all limited by the following examples and modifications and variations may be appropriately made therein without changing the gist of the invention.

<Synthesis of Exhaust Gas Purification Catalyst>

(Example 1)

An amount of 36.6 parts by mass of sodium carbonate, 42.6 parts by mass of zirconium oxide, and 20.8 parts by mass of silicon oxide were mixed and the mixture was fired at 1200°C for four hours. The resultant particulate solid was confirmed to be single-phase $Na_2ZrSiO_5$ by X-ray diffractometry.

(Example 2)

An amount of 30.3 parts by mass of sodium carbonate, 35.3 parts by mass of zirconium oxide, and 34.4 parts by mass of silicon oxide were mixed and the mixture was fired at 1200°C for four hours. The resultant particulate solid was confirmed to be single-phase $Na_2ZrSi_2O_7$ by X-ray diffractometry.

(Example 3)

An amount of 25.9 parts by mass of sodium carbonate, 30.1 parts by mass of zirconium oxide, and 44.0 parts by mass of silicon oxide were mixed and the mixture was fired at 1200°C for four hours. The resultant particulate solid was confirmed to be single-phase $Na_2ZrSi_3O_9$ by X-ray diffractometry.

(Example 4)

An amount of 33.2 parts by mass of sodium carbonate, 38.6 parts by mass of zirconium oxide, and 28.2 parts by mass of silicon oxide were mixed and the mixture was fired at 1200°C for four hours. The resultant particulate solid was confirmed to be single-phase $Na_4Zr_2Si_3O_{12}$ by X-ray diffractometry.

(Example 5)

An amount of 43.0 parts by mass of potassium carbonate, 38.3 parts by mass of zirconium oxide, and 18.7 parts by mass of silicon oxide were mixed and the mixture was fired at 1200°C for four hours. The resultant particulate solid was confirmed to be single-phase $K_2ZrSiO_5$ by X-ray diffractometry.

(Example 6)

An amount of 36.2 parts by mass of potassium carbonate, 32.3 parts by mass of zirconium oxide, and 31.5 parts by mass of silicon oxide were mixed and the mixture was fired at 1200°C for four hours. The resultant particulate solid was confirmed to be single-phase $K_2ZrSi_2O_7$ by X-ray diffractometry.

(Example 7)

An amount of 31.3 parts by mass of potassium carbonate, 27.9 parts by mass of zirconium oxide, and 40.8 parts by mass of silicon oxide were mixed and the mixture was fired at 1200°C for four hours. The resultant particulate solid was confirmed to be single-phase $K_2ZrSi_3O_9$ by X-ray diffractometry.

(Example 8)

An amount of 51.8 parts by mass of cesium carbonate, 19.6 parts by mass of zirconium oxide, and 28.6 parts by mass of silicon oxide were mixed and the mixture was fired at 1200°C for four hours. The resultant particulate solid was confirmed to be single-phase $Cs_2ZrSi_3O_9$ by X-ray diffractometry.

(Example 9)

An amount of 28.7 parts by mass of lithium carbonate, 47.9 parts by mass of zirconium oxide, and 23.4 parts by mass of silicon oxide were mixed and the mixture was fired at 1200°C for four hours. The resultant particulate solid was confirmed to be single-phase $Li_2ZrSiO_5$ by X-ray diffractometry.

(Comparative Example 1)

An amount of 46.2 parts by mass of sodium carbonate and 53.8 parts by mass of zirconium oxide were mixed and the mixture was fired at 1200°C for four hours. The resultant particulate solid was confirmed to be single-phase $Na_2ZrO_3$ by X-ray diffractometry.

(Comparative Example 2)

An amount of 52.9 parts by mass of potassium carbonate and 47.1 parts by mass of zirconium oxide were mixed and the mixture was fired at 1200°C for four hours. The resultant particulate solid was confirmed to be single-phase $K_2ZrO_3$ by X-ray diffractometry.

(Comparative Example 3)

An amount of 63.8 parts by mass of sodium carbonate and 36.2 parts by mass of silicon oxide were mixed and the mixture was fired at 1200°C for four hours. The resultant viscous oily matter was confirmed to be single-phase $Na_2SiO_3$ by X-ray diffractometry.

(Comparative Example 4)

$Na_2ZrO_3$ obtained in Comparative Example 1 and $Na_2SiO_3$ obtained in Comparative Example 3 were mixed in equal proportions of 50% by mass to produce a mixture.

(Comparative Example 5)

An amount of 51.0 parts by mass of sodium carbonate and 49.0 parts by mass of aluminum oxide were mixed and the mixture was fired at 1200°C for four hours. The resultant particulate solid was confirmed to be single-phase $NaAlO_2$ by X-ray diffractometry.

(Comparative Example 6)

An amount of 57.5 parts by mass of potassium carbonate and 42.5 parts by mass of aluminum oxide were mixed and the mixture was fired at 1200°C for four hours. The resultant particulate solid was confirmed to be single-phase $KAlO_2$ by X-ray diffractometry.

(Comparative Example 7)

An amount of 32.3 parts by mass of sodium carbonate, 31.1 parts by mass of aluminum oxide, and 36.6 parts by mass of silicon oxide were mixed and the mixture was fired at 1200°C for four hours. The resultant particulate solid was confirmed to be single-phase $NaAlSiO_4$ by X-ray diffractometry.

(Comparative Example 8)

An amount of 38.4 parts by mass of potassium carbonate, 28.3 parts by mass of aluminum oxide, and 33.3 parts by mass of silicon oxide were mixed and the mixture was fired at 1200°C for four hours. The resultant particulate solid was confirmed to be single-phase $KAlSiO_4$ by X-ray diffractometry.

<Evaluation of Exhaust Gas Purification Catalyst>

(Ionic Conductivity)

An amount of 10 g of each of the obtained exhaust gas purification catalysts was produced into a compact and the compact was fired at 1200°C for four hours. A piece of aluminum foil was pressure bonded to the obtained sintered body with an electrically conductive paste (Varniphite T-602 manufactured by Nippon Graphite Industries, Co., Ltd.) to form an electrode and an aluminum lead was pressure bonded to the electrode to obtain a measurement sample. The obtained measurement samples were measured for ionic conductivity using an impedance analyzer (IviumStat manufactured by Ivium Technologies). The results are shown in Table 1. Note that since Comparative Example 3 was a viscous oily matter, measurement samples appropriate to the measurement could not be produced from Comparative Examples 3 and 4.

(PM Combustion Temperature)

Each of the obtained exhaust gas purification catalysts was ground in a mortar and 5% by mass carbon black (TOKABLACK #7100F manufactured by Tokai Carbon Co., Ltd.) was added as pseudo-PM to the ground product and mixed therewith in the mortar.
The obtained mixtures were measured for TG/DTA using a thermal analyzer (EXSTAR6000 TG/DTA6300 manufactured by Seiko Instruments Inc.) under the conditions of a temperature rise of 10°C/min, an atmosphere of dry air at a rate of 200 ml/min, and a sample amount of 10 mg to determine the temperature at which the rate of mass reduction due to combustion of the carbon black reaches a maximum (the peak temperature of the DTG curve). The results are shown in Table 1.

(Thermal Resistance)

An amount of 90 parts by mass of aluminum titanate (manufactured by MARUSU GLAZE, Co., Ltd.) was added to 10 parts by mass of each of the obtained exhaust gas purification catalysts and mixed therewith in a mortar. The obtained mixtures were fired at 1000°C for four hours. The mixtures having showed no change in X-ray diffraction peak compared to before firing were indicated by "o" and the mixtures having showed any change in X-ray diffraction peak compared to before firing were indicated by "x". The results are shown in Table 1.

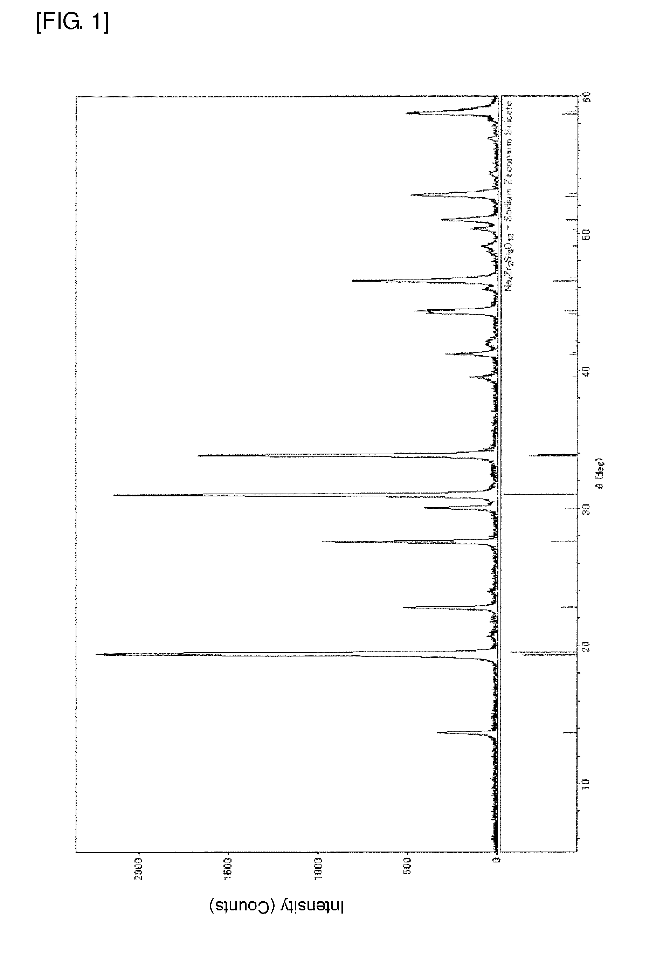

Fig. 1 shows an X-ray diffraction pattern chart of the catalyst $Na_4Zr_2Si_3O_{12}$ obtained in Example 4.

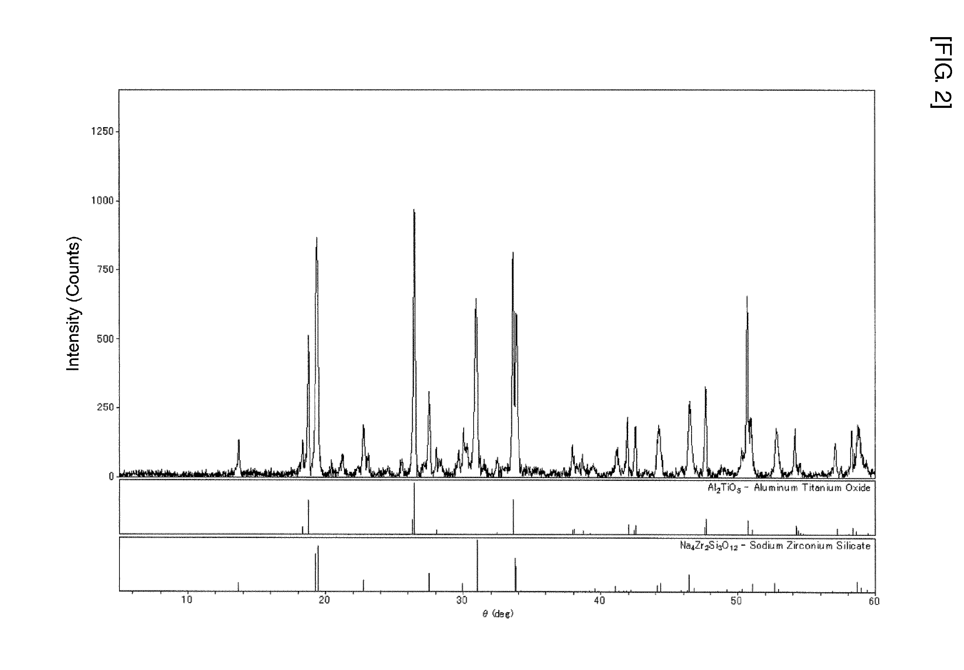

Fig. 2 shows an X-ray diffraction pattern chart of the fired product obtained by firing the mixture of the catalyst in Example 4 and aluminum titanate under the above conditions.

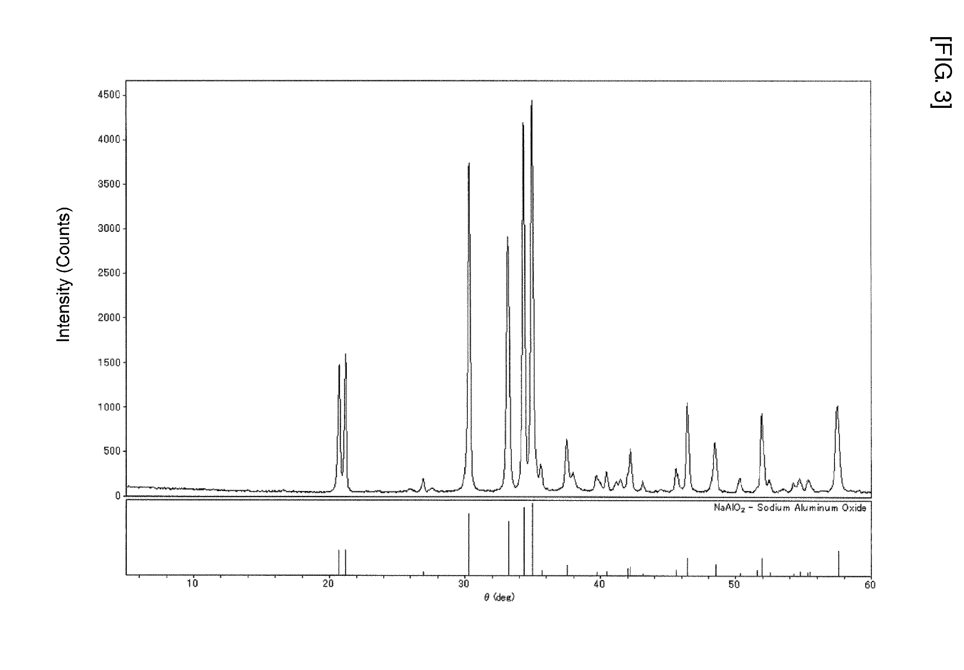

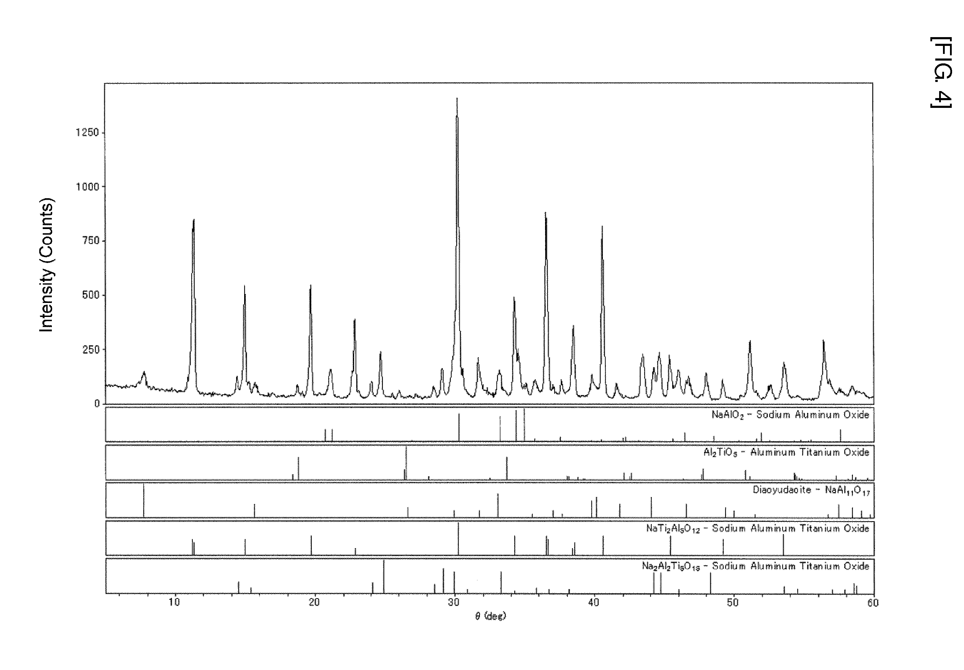

Fig. 3 shows an X-ray diffraction pattern chart of $NaAlO_2$ obtained in Comparative Example 5 and Fig. 4 shows an X-ray diffraction pattern chart of the fired product obtained by firing the mixture of $NaAlO_2$ and aluminum titanate under the above conditions.
As shown in Fig. 2, when the mixture of the catalyst in Example 4 and aluminum titanate was fired, the fired product showed only X-ray diffraction peaks of the catalyst and aluminum titanate and hardly showed other peaks.
In contrast, the fired product of the mixture of the solid of Comparative Example 5 and aluminum titanate, as shown in Fig. 4, showed not only X-ray diffraction peaks of $NaAlO_2$ and aluminum titanate but also X-ray diffraction peaks of compounds assumed to have been produced by decomposition of the above $NaAlO_2$ and aluminum titanate.

(Hardness)

Compounded into 10 parts by mass of each of the obtained exhaust gas purification catalysts were 90 parts by mass of aluminum titanate (manufactured by MARUSU GLAZE, Co., Ltd.), 20 parts by mass of graphite, 10 parts by mass of methylcellulose, and 0.5 parts by mass of fatty acid soap. A suitable amount of water was also added to the mixture and the mixture was then kneaded to obtain an extrudable clay.

The obtained clay was extruded and formed into a honeycomb structure by an extruder to obtain a green body. The cell density of the die was 300 cells/inch$^2$ (46.5 cells/cm$^2$) and the partition thickness was 500 $\mu$m.

The obtained green body was evaluated for hardness using a hardness tester (CLAY HARDNESS TESTER manufactured by NGK Insulators, Ltd.).

Fig. 6 is a schematic view showing the hardness tester used here. The hardness tester 5 includes an unshown spring contained in a cylindrical body 7 and a conical needle 6 provided at a distal end of the spring. The height X of the needle 6 is 35 mm and the diameter Y thereof is 10 mm. The spring constant of the spring contained in the cylindrical body 7 is 245 N/mm. The cylindrical body 7 is provided with a scale 7a, so that the amount of movement of the conical needle 6 can be read from the scale 7a.

The needle 6 of the hardness tester 5 was inserted into the green body to a predetermined position and at that time the load was measured by reading it from the scale 7a. In the present invention, the value read for load from the hardness tester 5 was taken as "Hardness". The hardness refers to the yield strength of material against a needle indenter; the smaller the resistance of material to the indenter, the weaker the material.

The actual measurement was made by inserting the hardness tester 5 into a flat portion of the green body to reach the root of the needle 6 in five seconds and recording the value read from the hardness tester 5 at that time (where the measurement value of the hardness tester 5 is within the range of 0 to 20). The results are shown in Table 1.

[Table 1]

| | Catalyst Composition | Ionic Conductivity (mS/cm) | PM Combustion Temperature (°C) | Thermal Resistance | Hardness |
|---|---|---|---|---|---|
| Ex. 1 | $Na_2ZrSiO_5$ | $0.9\times10^{-6}$ | 480 | ○ | 9 |
| Ex. 2 | $Na_2ZrSi_2O_7$ | $1.0\times10^{-6}$ | 486 | ○ | 11 |
| Ex. 3 | $Na_2ZrSi_3O_9$ | $1.0\times10^{-6}$ | 502 | ○ | 12 |
| Ex. 4 | $Na_4Zr_2Si_3O_{12}$ | $1.3\times10^{-6}$ | 483 | ○ | 10 |
| Ex. 5 | $K_2ZrSiO_5$ | $0.8\times10^{-6}$ | 461 | ○ | 9 |
| Ex. 6 | $K_2ZrSi_2O_7$ | $0.9\times10^{-6}$ | 475 | ○ | 9 |
| Ex. 7 | $K_2ZrSi_3O_9$ | $0.8\times10^{-6}$ | 489 | ○ | 10 |
| Ex. 8 | $Cs_2ZrSi_3O_9$ | $0.5\times10^{-6}$ | 479 | ○ | 9 |
| Ex. 9 | $Li_2ZrSiO_5$ | $0.6\times10^{-6}$ | 502 | ○ | 9 |
| Comp.Ex.1 | $Na_2ZrO_3$ | $0.7\times10^{-6}$ | 492 | × | 6 |
| Comp.Ex.2 | $K_2ZrO_3$ | $0.5\times10^{-6}$ | 483 | × | 5 |
| Comp.Ex.3 | $Na_2SiO_3$ | - | 469 | × | 2 |
| Comp.Ex.4 | $Na_2ZrO_3+Na_2SiO_3$ | - | 479 | × | 3 |
| Comp.Ex.5 | $NaAlO_2$ | $<1.0\times10^{-8}$ | 518 | × | 2 |
| Comp.Ex.6 | $KAlO_2$ | $<1.0\times10^{-8}$ | 512 | × | 2 |
| Comp.Ex.7 | $NaAlSiO_4$ | $<1.0\times10^{-8}$ | 562 | ○ | 11 |
| Comp.Ex.8 | $KAlSiO_4$ | $<1.0\times10^{-8}$ | 558 | ○ | 10 |

As shown in Table 1, Examples 1 to 9 according to the present invention exhibit low PM combustion temperature and high thermal resistance. Furthermore, Examples 1 to 9 exhibit high hardness and therefore can be seen to have less effect on the green bodies.

<Production of Exhaust Gas Purification Filter>

Compounded into 30 parts by mass of the exhaust gas purification catalyst obtained in Example 4 were 70 parts by mass of aluminum titanate (manufactured by MARUSU GLAZE, Co., Ltd.), 20 parts by mass of graphite, 10 parts by mass of methylcellulose, and 0.5 parts by mass of fatty acid soap. A suitable amount of water was also added to the mixture and the mixture was then kneaded to obtain an extrudable clay.

The obtained clay was extruded and formed into a honeycomb structure by an extruder to obtain a green body. The cell density of the die was 300 cells/inch$^2$ (46.5 cells/cm$^2$) and the partition thickness was 300 $\mu$m.

A slurry was prepared the solid of which was substantially made of aluminum titanate (manufactured by MARUSU GLAZE, Co., Ltd.) and the exhaust gas purification catalyst obtained in Example 4 and to which an additive, such as a viscosity modifier, was added.

The slurry was applied in some of the cells of the green body having a honeycomb structure to seal some of the cell openings so that the open cells and sealed cells of the honeycomb structure gave a checkered pattern.

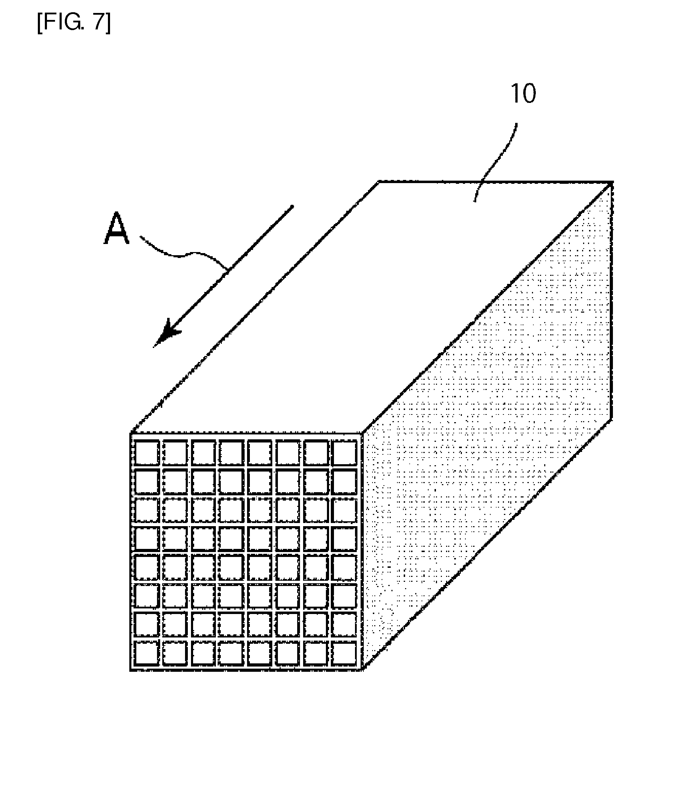

The green body with some of the cells sealed was fired by holding it at 600°C for 10 hours, then raising the temperature to 1000°C at a rate of 25°C/h, and holding it at 1000°C for 10 hours, resulting in an exhaust gas purification filter. Fig. 7 is a perspective view showing the resultant exhaust gas purification filter 10. In Fig. 7, the arrow A represents the direction of extrusion.

For evaluations, the resultant exhaust gas purification filter was subjected to a regeneration test in the following manner.

The initial weight of the exhaust gas purification filter was previously measured and an oxidation catalyst (DOC) and the exhaust gas purification filter were placed in this order in an exhaust line of a diesel engine. After the placement, the diesel engine was started, a specific amount (approximately 8 g/L) of PM was deposited on the filter under the operating condition in which the exhaust temperature became low, the sintered honeycomb body was then removed from the exhaust line, and the weight of PM deposited was measured.

Next, the exhaust gas purification filter having PM deposited thereon was placed in an exhaust line for pseudo-gases. After the placement, pseudo-exhaust gases having a composition shown in Table 2 were allowed to flow through the filter to reach a space velocity (SV value) of 20000/h, the exhaust temperature was raised to 540°C, and the regeneration test was then started. For 30 minutes after the exhaust temperature reached 540°C, the filter was held at a temperature of 540°C ± 10°C. After a lapse of 30 minutes, the total amount of the pseudo-exhaust gases was changed to nitrogen gas. After the exhaust temperature dropped to room temperature, the exhaust gas purification filter was removed again and its weight reduction (i.e., the weight of PM combusted) was measured. The results are shown in Table 2.

The regeneration rate was obtained from the following calculation formula:

$$\text{Regeneration rate (\%)} = 100 - [(\text{weight of PM deposited (g)} - \text{weight of PM combusted (g)})/\text{weight of PM deposited (g)}] \times 100.$$

[Table 2]

| | Pseudo-Exhaust Gas Composition | | | | | | Regeneration Rate |
|---|---|---|---|---|---|---|---|
| | $O_2$ | CO | $CO_2$ | NO | $NO_2$ | $N_2$ | |
| Evaluation 1 | 10.00% | 0.03% | 5.00% | 0.02% | 0.02% | 84.93% | 80% |
| Evaluation 2 | 10.00% | 0.03% | 5.00% | 0.00% | 0.00% | 84.97% | 83% |

Platinum-based catalysts used in conventional exhaust gas filters burn off PM using the $NO_2$ oxidation capacity. Unlike this, the exhaust gas purification filter according to the present invention can combust PM in spite of the presence or absence of $NO_2$ as shown in Table 2.

Reference Signs List

1    exhaust gas purification device

2    source of exhaust gases

3, 4    pipe

5    hardness tester

6    conical needle

7    cylindrical body

7a    scale

10    exhaust gas purification filter

A    direction of extrusion of green body

**Claims**

1. An exhaust gas purification catalyst being composite oxide particles containing at least one alkali metal, Si, and Zr.

2. The exhaust gas purification catalyst according to claim 1, having an ionic conductivity of $0.5 \times 10^{-6}$ mS/cm or more.

3. The exhaust gas purification catalyst according to claim 1 or 2, wherein the content rates of the metals, exclusive of oxygen, in the composite oxide are 30 to 60% by mole alkali metal, 20 to 60% by mole Si, and 10 to 40% by mole Zr.

4. The exhaust gas purification catalyst according to claim 1 or 2, wherein the composite oxide is represented by the following general formula:

$$A_{2X}Zr_XSi_YO_{3X+2Y}$$

   where A represents at least one alkali metal, X represents a positive real number satisfying $1 \leq X \leq 2$, and Y represents a positive real number satisfying $1 \leq Y \leq 6$.

5. An exhaust gas purification device comprising the exhaust gas purification catalyst according to any one of claims 1 to 4.

6. An exhaust gas purification filter, including a support and the exhaust gas purification catalyst according to any one of claims 1 to 4, the exhaust gas purification catalyst being supported on the support.

7. The exhaust gas purification filter according to claim 6, wherein the support is a honeycomb filter.

8. A method for producing the exhaust gas purification catalyst according to any one of claims 1 to 4, wherein the exhaust gas purification catalyst is produced by firing a mixture containing at least one alkali metal salt, a silicon source, and a zirconium source.

[FIG. 1]

[FIG. 2]

[FIG. 3]

EP 2 826 558 A1

[FIG. 4]

14

[FIG. 5]

[FIG. 6]

[FIG. 7]

## INTERNATIONAL SEARCH REPORT

International application No.

PCT/JP2013/055279

### A. CLASSIFICATION OF SUBJECT MATTER

$B01J23/04(2006.01)i$, $B01D53/94(2006.01)i$, $F01N3/023(2006.01)i$, $F01N3/035$
$(2006.01)i$, $F01N3/10(2006.01)i$

According to International Patent Classification (IPC) or to both national classification and IPC

### B. FIELDS SEARCHED

Minimum documentation searched (classification system followed by classification symbols)
B01J23/04, B01D53/94, F01N3/023, F01N3/035, F01N3/10

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)
JSTPlus(JDreamIII), JST7580(JDreamIII), JSTChina(JDreamIII)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2000-202243 A  (Hitachi, Ltd.),<br>25 July 2000 (25.07.2000),<br>claims; paragraphs [0047], [0048], [0051],<br>[0052], [0057]<br>(Family: none) | 1-7<br>8 |
| Y | G.VITINS et al., Synthesis and structural and ionic conductivity studies of $Na_2ZrSi_4O_{11}$,<br>Solid State Ionics, 1996.07, Vol.86-88 No.1,<br>Pages119-124 | 8 |
| A | JP 9-085092 A  (Toyota Central Research and Development Laboratories, Inc.),<br>31 March 1997 (31.03.1997),<br>entire text<br>(Family: none) | 1-8 |

☐ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 May, 2013 (22.05.13) | 04 June, 2013 (04.06.13) |

| Name and mailing address of the ISA/<br>Japanese Patent Office | Authorized officer |
|---|---|
| Facsimile No. | Telephone No. |

Form PCT/ISA/210 (second sheet) (July 2009)

<table>
<tr><td align="center">**INTERNATIONAL SEARCH REPORT**</td><td>International application No.<br>PCT/JP2013/055279</td></tr>
</table>

**Box No. II       Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III       Observations where unity of invention is lacking (Continuation of item 3 of first sheet)**

This International Searching Authority found multiple inventions in this international application, as follows:
        The technical feature of the invention of claim 1 has been publicly known as disclosed in the document 1.
        Consequently, claims 1-8 involve two or more inventions, since claims 1-8 are classified into the main invention of claims 1-7 and the inventions of other claims.
        Document 1: JP 2000-202243 A  (Hitachi, Ltd.)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**       ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10118490 A